# FASCICULE DE BREVET EUROPEEN

(11) **EP 3 020 220 B1**
(45) Date de publication et mention de la délivrance du brevet: **30.05.2018**
(21) Numéro de dépôt: 14739128.8
(22) Date de dépôt: 10.07.2014
(51) Int. Cl.: H04W 12/08, H04L 29/06, H04W 4/00, H04W 4/02, H04W 4/04, G06F 21/30, G06F 21/35, G07C 9/00

(54) **DISPOSITIF ET PROCÉDÉ DE CONTRÔLE D'ACCÈS À AU MOINS UNE MACHINE**
VORRICHTUNG UND VERFAHREN ZUR STEUERUNG DES ZUGRIFFS AUF MINDESTENS EINE MASCHINE
DEVICE AND METHOD FOR CONTROLLING ACCESS TO AT LEAST ONE MACHINE

(30) Priorité: 12.07.2013 FR 1356914
(43) Date de publication de la demande: 18.05.2016
(73) Titulaire: Blinksight, 14460 Colombelles (FR)
(72) Inventeur: MUTZ, Stéphane, F-14840 Cuverville (FR); MUTZ, Matthieu, F-14000 Caen (FR)
(74) Mandataire: Regimbeau
(86) Numéro de dépôt international: PCT/EP2014/064798
(87) Numéro de publication internationale: WO 2015/004226

(56) Documents cités:
- EP-A1- 1 653 759
- WO-A1-2013/084030
- US-A1- 2005 221 798

## Description

L'invention concerne un dispositif et un procédé de contrôle d'accès à au moins une machine.

Un domaine d'application de l'invention concerne les machines pouvant être un ordinateur, une tablette numérique, un téléphone portable, un serveur, une mémoire informatique, un dispositif de stockage de données informatiques.

La protection d'informations ou de dispositifs sensibles prend une importance croissante dans le monde actuel. Parce qu'ils contiennent souvent des données sensibles, les ordinateurs utilisés quotidiennement par la plupart des gens nécessitent d'être verrouillés pour empêcher le vol de données ou une utilisation malveillante. L'usage de nombreux autres équipements doit être réservé à un personnel qualifié et habilité.

Il existe de nombreux systèmes de contrôle d'accès plus ou mieux pratiques et robustes sur le marché. Dans la grande majorité des cas, ils s'appuient sur la connaissance d'un secret comme un mot de passe par les utilisateurs autorisés. Avec l'augmentation des capacités technologiques, les mots de passe deviennent de plus en plus vulnérables aux attaques informatiques. D'un autre côté, des mots de passe plus complexes sont difficilement mémorisables et conduisent à créer d'autres failles de sécurité (mots de passe écrits que l'on garde avec soi, phrases connues, ...).

D'autres systèmes tels que les systèmes biométriques ou type cartes à puces permettent de résoudre certaines faiblesses. Cependant, ils n'adressent pas un point essentiel. S'ils permettent de déverrouiller un système lorsqu'un utilisateur doit y accéder, ils ne permettent pas en revanche de provoquer un verrouillage du système automatique et sûr lorsque l'opérateur s'absente sans nécessiter son intervention (retrait de la carte, déclenchement du verrou manuel). Très souvent, le système reste accessible pendant un laps de temps variable pour des raisons de confort d'utilisation générant ainsi un risque de sécurité avéré.

Le document US-B-7 515 048 décrit un système dans lequel un ordinateur mobile est muni d'un émetteur-récepteur RFID émettant un signal vers un émetteur RFID pouvant être porté par le portefeuille ou une chaîne d'une personne, lequel lorsqu'il a détecté ce signal, renvoie un signal de réponse vers l'émetteur-récepteur RFID, lequel en présence de ce signal de réponse déverrouille alors l'ordinateur. Si l'émetteur-récepteur RFID ne détecte pas le signal de réponse, il verrouille alors l'ordinateur.

Le document US-A-2008/00 18 475 concerne un dispositif de localisation d'une étiquette RFID prévue sur un objet dans un espace de stockage d'un véhicule automobile, lequel comporte des antennes pour émettre un signal d'interrogation de l'étiquette RFID, laquelle répond en renvoyant un signal aux antennes pour en déduire une information de position d'interrogation de l'étiquette RFID.

Le document EP-A-1 760 621 décrit un dispositif comportant à proximité d'un écran un capteur détectant l'identifiant d'une étiquette RFID porté par une personne, le capteur étant combiné à un dispositif de suivi de position, tel que par exemple un système GPS, qui définit une localisation de la personne et un périmètre autour de l'écran. Lorsqu'une personne non autorisée entre dans ce périmètre, un contrôleur d'écran compare un niveau de sécurité associé à l'identifiant avec des critères de sécurité pour empêcher de présenter dans certains cas une information sur l'écran à une personne non autorisée.

Le document US-A-2011/00 93 958 décrit un dispositif pour empêcher l'accès non autorisé à des données stockées sur un appareil mobile comme, par exemple, un téléphone mobile ou une clé USB, en étant muni d'un système de communication sans fil vérifiant la présence d'un appareil à proximité pour autoriser ou ne pas autoriser une fonction, à l'aide d'une carte ou d'un badge RFID détecté par un dispositif RFID.

Le document EP-A-1 653 759 décrit un dispositif selon le préambule de la revendication 1. Dans ce dispositif, un dispositif accessoire envoie par des moyens de communication sans fil un signal de communication à un terminal de radiotéléphonie mobile. Le terminal radio mobile comprend un moyen de verrouillage, qui est adapté pour bloquer au moins une fonction prévue sur le terminal radio mobile suite à la réception d'un signal de communication qui représente une information de distance entre le terminal radio mobile et le dispositif accessoire dépassant une valeur de distance de référence ou suite à la non réception d'un signal de communication indiquant que le terminal radio mobile et le dispositif accessoire sont à l'intérieur de la distance de référence l'un de l'autre. Le terminal radio mobile comporte dans un cas un moyen d'estimation de la distance sur la base de l'intensité du signal de communication reçu du dispositif accessoire ou, dans un autre cas, un émetteur d'un signal d'interrogation vers une cible de transpondeur, qui est prévue sur le dispositif accessoire et qui est adaptée pour répondre au signal d'interrogation par un signal de retour envoyé au terminal radio mobile. Dans ce dernier cas, le signal d'interrogation est mélangé au signal de retour dans le terminal radio mobile pour mesurer la distance entre le terminal radio mobile et le dispositif accessoire.

Le document WO 2013/084030 décrit un dispositif de calcul de distance entre un appareil démonstrateur et un appareil vérificateur. Le démonstrateur envoie des paquets au vérificateur. Le vérificateur comporte deux réseaux d'antennes séparés d'une distance connue et recevant les paquets et calcule à partir de ceux-ci des premier et deuxième angles d'arrivée sur respectivement les deux réseaux d'antennes. Puis le vérificateur utilise les deux angles d'arrivée pour calculer deux distances entre le démonstrateur et les deux réseaux d'antennes.

D'autres dispositifs existent, utilisant la fonction Bluetooth (marque déposée) d'un téléphone portable.

Aucun des systèmes précités n'est à même d'apporter une réponse fiable au verrouillage / déverrouillage automatique d'un équipement lors du départ ou de l'arrivée d'un opérateur habilité, et notamment pas le document EP-A-1 653 759, qui demeure vulnérable aux tentatives abusives d'accès à la machine en présence de l'utilisateur habilité à proximité sans que celui-ci s'en aperçoive ou dans des environnements où l'utilisateur habilité est entouré d'un grand nombre de personnes.

Par conséquent, l'invention vise à élever le niveau de sécurité du dispositif de contrôle d'accès.

L'invention vise à obtenir un procédé et un dispositif de contrôle d'accès à au moins une machine, palliant les inconvénients de l'état de la technique.

A cet effet, un premier objet de l'invention est un dispositif de contrôle d'accès à au moins une machine selon la revendication 1.

Le dispositif suivant l'invention offre ainsi un niveau de sécurité accru. C'est l'émission par l'objet portatif du premier signal qui réveille le dispositif de verrouillage et de déverrouillage de la machine. Ainsi, le dispositif de verrouillage et déverrouillage, ainsi que la machine, n'ont pas à envoyer de signaux d'interrogation d'un objet porté par l'utilisateur, ce qui évite les fraudes qui étaient dues, dans les dispositifs de verrouillage et de déverrouillage connus dans l'état de la technique, à la détection de ce signal d'interrogation émis régulièrement par ces dispositifs de verrouillage et de déverrouillage connus. En outre, cela évite aussi de devoir laisser l'objet portatif en mode réception, ce qui est très gourmand en energie.

Suivant un mode de réalisation de l'invention, la machine comporte au moins un écran d'affichage, la plage angulaire prescrite est comprise dans une zone située devant l'écran d'affichage.

Suivant un mode de réalisation de l'invention, la plage angulaire prescrite correspond à un secteur angulaire de vision de l'écran d'affichage.

Ainsi, le dispositif permet de mieux contrôler l'accès à la machine, en n'autorisant le déverrouillage que dans la plage angulaire prescrite par rapport à cette machine en plus d'une distance inférieure à la valeur prescrite de distance. Le dispositif assure d'empêcher l'accès à la machine en la verrouillant, lorsque par exemple l'utilisateur portant l'objet portatif n'est pas en mesure de voir le fonctionnement de la machine et lorsque l'utilisateur n'est pas en mesure de déterminer s'il résulte de ce fonctionnement de la machine la divulgation d'informations critiques envoyées par la machine à des personnes tierces non autorisées, et ce lorsque cet utilisateur habilité est pourtant à moins de la distance prescrite de la machine. Le dispositif répond ainsi aux situations particulières où l'utilisateur ne peut pas contrôler ou voir ce qu'affiche sa machine, par exemple lorsqu'il est suffisamment près de la machine (à moins de la valeur prescrite de distance) mais pas du côté où il peut voir ce qu'affiche sa machine et où en revanche d'autres personnes non habilitées peuvent voir ce qu'affiche la machine. Ainsi, l'invention assure une meilleure discrétion. L'invention ne permet le déverrouillage de la machine que lorsque l'utilisateur portant l'objet portatif se trouve dans la plage prescrite à moins de la valeur prescrite de distance, pour garantir ainsi qu'il puisse lui-même contrôler de visu ce qu'affiche ou divulgue la machine et contrôler les personnes pouvant se trouver dans la plage angulaire prescrite. Ainsi, l'invention permet de résoudre le problème précité non résolu par le document EP-A-1 653 75 et empêche les tentatives abusives d'accès à la machine en présence de l'utilisateur habilité.

Suivant un mode de réalisation de l'invention, le dispositif de verrouillage et de déverrouillage de la machine comporte le sixième moyen de calcul de la distance entre l'objet portatif et le dispositif de verrouillage et de déverrouillage de la machine à partir des deuxième et troisième signaux, ainsi que le septième moyen de comparaison de la distance ayant été calculée à la valeur prescrite de distance.

Suivant un mode de réalisation de l'invention, l'objet portatif comporte le sixième moyen de calcul de la distance entre l'objet portatif et le dispositif de verrouillage et de déverrouillage de la machine à partir des premier et deuxième signaux.

Suivant un mode de réalisation de l'invention, l'objet portatif comporte également le septième moyen de comparaison de la distance ayant été calculée à la valeur prescrite de distance, apte à déterminer un résultat de comparaison indiquant soit que la distance ayant été calculée est inférieure à la valeur prescrite de distance, soit que la distance ayant été calculée est supérieure à la valeur prescrite de distance,
le septième moyen de comparaison étant connecté au premier organe d'émission pour que le premier organe d'émission émette dans le troisième signal le résultat de comparaison,
le troisième organe de commande étant apte à provoquer, lorsque le deuxième émetteur-récepteur radio sans fil a reçu dans le troisième signal le résultat de comparaison indiquant que la distance ayant été calculée est inférieure à la valeur prescrite de distance, l'action de déverrouillage de la machine.

Suivant un mode de réalisation de l'invention, le dispositif de verrouillage et de déverrouillage de la machine comporte le sixième moyen de calcul de la distance entre l'objet portatif et le dispositif de verrouillage et de déverrouillage de la machine à partir des premier et troisième signaux, ainsi que le septième moyen de comparaison de la distance ayant été calculée à la valeur prescrite de distance.

Suivant un mode de réalisation de l'invention, le troisième organe de commande est apte à provoquer, en réponse à l'absence de premier signal et/ou de troisième signal reçu par le deuxième émetteur-récepteur pendant un temps prescrit ou en cas d'absence de signal pendant un laps de temps, une action de verrouillage de la machine.

Suivant un mode de réalisation de l'invention, le premier organe d'émission est agencé pour émettre en permanence selon des intervalles de temps le premier signal.

Suivant un mode de réalisation de l'invention, le temps prescrit est supérieur à chaque intervalle de temps d'émission du premier signal par le premier organe d'émission et inférieur à deux ou plusieurs intervalles de temps d'émission consécutifs du premier signal par le premier organe d'émission.

Suivant un mode de réalisation de l'invention, le premier signal et/ou le deuxième signal et/ou le troisième signal comporte une première identification identifiant l'objet portatif et/ou la personne devant porter cet objet portatif et/ou la machine et/ou au moins un utilisateur autorisé de la machine.

Suivant un mode de réalisation de l'invention, le premier signal comporte une première identification identifiant l'objet portatif et/ou la personne devant porter cet objet portatif,
le deuxième signal comporte une deuxième identification identifiant la machine, et
le troisième signal comporte la première identification et la deuxième identification.

Suivant un mode de réalisation de l'invention, le dispositif de verrouillage et de déverrouillage de la machine comporte un neuvième moyen de calcul d'un angle d'arrivée du premier signal et/ou du troisième signal et un dixième moyen de comparaison de l'angle d'arrivée ayant été calculé à au moins une plage angulaire prescrite,
le dixième moyen de comparaison étant connecté au troisième organe de commande pour provoquer, lorsque le dixième moyen de comparaison a déterminé que l'angle d'arrivée ayant été calculé se trouve dans la plage angulaire prescrite et lorsque le septième moyen de comparaison a déterminé que la distance ayant été calculée est inférieure à la valeur prescrite de distance, l'action de déverrouillage de la machine, et pour provoquer, lorsque le dixième moyen de comparaison a déterminé que l'angle d'arrivée ayant été calculé ne se trouve pas dans la plage angulaire prescrite et/ou lorsque le septième moyen de comparaison a déterminé que la distance ayant été calculée est supérieure à la valeur prescrite de distance, l'action de verrouillage de la machine.

Suivant un mode de réalisation de l'invention, la machine comporte au moins un écran d'affichage, la plage angulaire prescrite est comprise dans une zone située devant l'écran d'affichage.

Suivant un mode de réalisation de l'invention, le premier organe d'émission est agencé pour émettre le premier signal de manière omnidirectionnelle.

Suivant un mode de réalisation de l'invention, l'objet portatif comporte un premier capteur de détection de présence d'une personne portant l'objet portatif, le cinquième organe de commande et/ou le premier organe d'émission étant relié au premier capteur pour lui envoyer, lorsque le premier capteur a détecté que l'objet portatif n'est pas porté par une personne, un signal d'inactivation du premier organe d'émission afin que celui-ci n'émette plus le premier signal.

Suivant un mode de réalisation de l'invention, l'objet portatif comporte un deuxième détecteur de mouvement de l'objet portatif, le cinquième organe de commande étant connecté au deuxième détecteur de mouvement de l'objet portatif pour provoquer, lorsque le deuxième détecteur de mouvement de l'objet portatif a détecté un mouvement de l'objet portatif, l'émission du premier signal.

Suivant un mode de réalisation de l'invention, l'action de verrouillage comporte une action d'effacement de données.

Un deuxième objet de l'invention est un procédé de contrôle d'accès à au moins une machine selon la revendication 17.

L'invention sera mieux comprise à la lecture de la description qui va suivre, donnée uniquement à titre d'exemple non limitatif en référence aux dessins annexés, sur lesquels :
- la figure 1 est un synoptique modulaire représentant le dispositif de contrôle d'accès à au moins une machine suivant un mode de réalisation de l'invention,
- la figure 2 représente schématiquement un échange de signaux entre un objet portatif et un dispositif de verrouillage et de déverrouillage de la machine, suivant un mode de réalisation de l'invention.

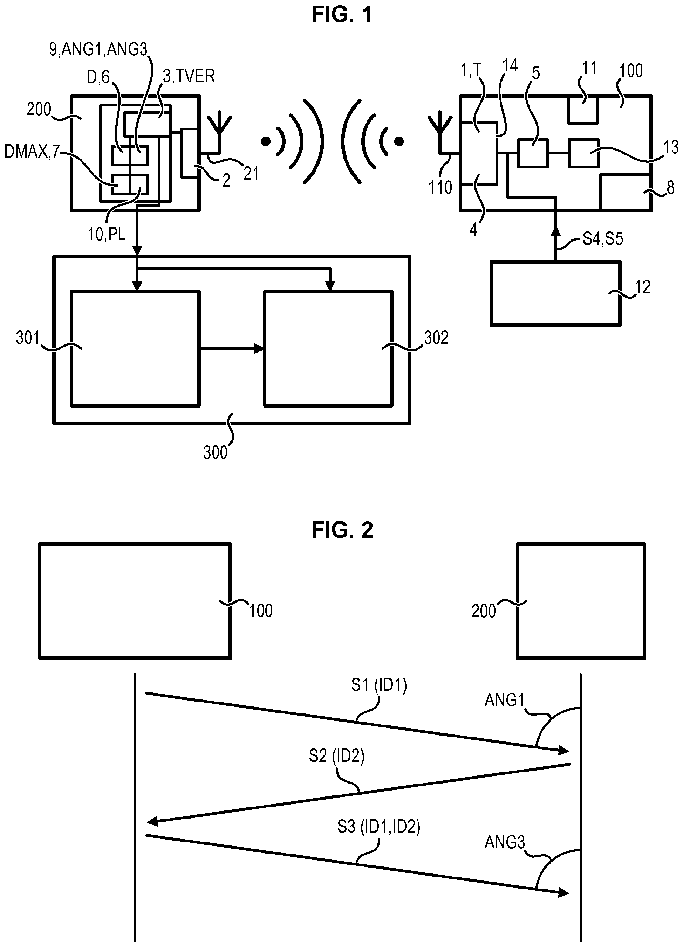

Aux figures 1 et 2, le dispositif de contrôle d'accès à au moins une machine 300 suivant l'invention comporte un objet portatif 100 et un dispositif 200 de verrouillage et de déverrouillage de la machine 300.

La machine 300 peut être par exemple un ordinateur, fixe ou portable, une tablette numérique, un téléphone portable, un serveur, une mémoire informatique, amovible (clé USB ou autre) ou non, un dispositif de stockage de données. La machine peut également être une voiture automobile.

Par exemple, ainsi que cela est représenté à la figure 1, la machine 300 peut comporter un ou plusieurs écrans 301 d'affichage et/ou une ou plusieurs mémoires 302 ou système(s) 302 de stockage de données.

L'objet portatif 100 est distinct de la machine 300 et est destiné à être porté par une personne, en pouvant être par exemple sous la forme d'un badge, d'un bracelet, d'une montre, d'un porte-clés ou de tout autre objet.

Suivant l'invention, l'objet portatif 100 comporte un premier organe 1 d'émission radio sans fil, apte à émettre par une liaison radio sans fil un premier signal S1, par exemple de manière omnidirectionnelle.

Suivant un mode de réalisation, le premier organe 1 d'émission radio sans fil émet le premier signal S1 en permanence selon des intervalles T de temps.

Le dispositif 200 de verrouillage et de déverrouillage de la machine 300 peut être par exemple solidaire de cette machine 300 ou être relié ou connecté à celle-ci, cette connexion pouvant être filaire ou sans fil par une liaison radio.

Le dispositif 200 de verrouillage et de déverrouillage de la machine 300 comporte un deuxième émetteur-récepteur 2 radio sans fil, apte à recevoir le premier signal S1, et un troisième organe 3 de commande, qui est connecté au deuxième émetteur-récepteur radio sans fil et qui est apte à provoquer une action de déverrouillage de la machine 300, selon le processus qui sera décrit ci-dessous.

Le troisième organe 3 de commande est apte à provoquer, lorsque le deuxième émetteur-récepteur 2 a reçu le premier signal S1, l'émission d'un deuxième signal S2 par le deuxième émetteur-récepteur 2 radio sans fil à destination d'un quatrième récepteur 4 radio sans fil porté par l'objet portatif 100. Ce quatrième récepteur 4 radio sans fil est apte à recevoir le deuxième signal S2.

L'objet portatif 100 comporte un cinquième organe 5 de commande, qui est connecté au premier 1 d'émission et quatrième récepteur 4 radio sans fil pour provoquer, lorsque le quatrième récepteur 4 radio sans fil a reçu le deuxième signal S2, l'émission d'un troisième S3 par le premier organe 1 d'émission à destination du deuxième émetteur-récepteur 2 radio sans fil. Le deuxième émetteur-récepteur 2 radio sans fil est apte à recevoir le troisième signal S3.

Le troisième organe 3 de commande et/ou cinquième organe 5 de commande est connecté à un sixième moyen 6 de calcul d'une distance D entre l'objet portatif 100 et le dispositif 200 de verrouillage et de déverrouillage de la machine 300 à partir des deuxième et troisième signaux S2, S3 et/ou à partir des premier et deuxième signaux S1, S2.

Le sixième moyen 6 de calcul de la distance D est connecté à un septième moyen 7 de comparaison de la distance D ayant été calculée à une valeur prescrite de distance DMAX. Le septième moyen 7 de comparaison est connecté au troisième organe 3 de commande pour provoquer, lorsque le septième moyen 7 de comparaison a déterminé que la distance D ayant été calculée est inférieure à la valeur prescrite de distance DMAX, l'action de déverrouillage de la machine 300, et pour provoquer, lorsque le septième moyen 7 de comparaison a déterminé que la distance D ayant été calculée est supérieure à la valeur prescrite de distance DMAX, une action de verrouillage de la machine 300.

L'action de déverrouillage de la machine permet son utilisation par une personne. L'action de verrouillage de la machine ne permet pas son utilisation par les personnes, et correspond par exemple à une mise en veille, une coupure d'accès aux organes de la machine, une coupure d'accès à un réseau, l'affichage d'un écran de veille par l'écran 301 pour une action de verrouillage de l'écran 301, la coupure de l'accès à la mémoire 302 pour une action de verrouillage de la mémoire 302. L'action de verrouillage peut comporter une action d'effacement de certaines données ou toutes les données dans la mémoire 302. Ainsi, dans ce cas, l'éloignement de l'utilisateur de l'objet 100 de plus d'une certaine distance et/ou l'absence du premier signal ou de l'objet 100 pendant plus d'un certain temps provoquent la destruction de données dans la mémoire 302, empêchant qu'un tiers puisse prendre connaissance de ces données en cas d'absence de l'utilisateur.

Suivant un mode de réalisation, le dispositif 200 de verrouillage et de déverrouillage de la machine 300 comporte un neuvième moyen 9 de calcul d'un angle ANG1 d'arrivée du premier signal S1 et/ou d'un angle ANG3 d'arrivée du troisième signal S3, et un dixième moyen 10 de comparaison de l'angle d'arrivée ANG1 et/ou ANG3 ayant été calculé à au moins une plage angulaire prescrite PL. Le septième moyen 7 de comparaison et le dixième moyen 10 de comparaison sont connectés au troisième organe 3 de commande pour provoquer, lorsque le dixième moyen 10 de comparaison a déterminé que l'angle ANG1 et/ou ANG3 d'arrivée ayant été calculé se trouve dans la plage angulaire prescrite PL et lorsque le septième moyen 7 de comparaison a déterminé que la distance D ayant été calculée est inférieure à la valeur prescrite de distance DMAX, l'action de déverrouillage de la machine 300. Le septième moyen 7 de comparaison et le dixième moyen 10 de comparaison sont connectés au troisième organe 3 de commande pour provoquer, lorsque le dixième moyen 10 de comparaison a déterminé que l'angle ANG1 et/ou ANG3 d'arrivée ayant été calculé ne se trouve pas dans la plage angulaire prescrite PL et/ou lorsque le septième moyen 7 de comparaison a déterminé que la distance D ayant été calculée est supérieure à la valeur prescrite de distance DMAX, une action de verrouillage de la machine 300. On peut faire la vérification d'angle sur S1 ou S3 ou les 2.

Ainsi, l'invention permet de déterminer si l'utilisateur habilité de la machine se trouve par exemple devant la machine pour ne déverrouiller la machine que si l'utilisateur portant l'objet portatif se trouve dans la plage angulaire prescrite PL par rapport à la machine, pouvant être devant la machine. La plage angulaire prescrite PL est prescrite par exemple par rapport à un organe prescrit de la machine, pouvant être un écran 301 d'affichage ou autres, ou plus généralement par rapport à un organe susceptible d'émettre vers l'extérieur (par affichage ou autres) des informations critiques que l'utilisateur habilité ne souhaite pas forcément divulguer à des tiers ou que l'utilisateur ne souhaite divulguer que sous son propre contrôle.

L'invention permet ainsi de déterminer précisément la position relative de l'utilisateur et de la machine pour décider du verrouillage et du déverrouillage, en exploitant non seulement la distance mais également la direction par rapport à la machine pour obtenir un système plus sûr.

Suivant un mode de réalisation, la plage angulaire prescrite est comprise dans une zone située devant le au moins un écran 301 d'affichage.

Suivant un mode de réalisation, la plage angulaire prescrite correspond à un secteur angulaire de vision de l'écran 301 d'affichage. Ce secteur angulaire de vision est par exemple limité à la plage angulaire prescrite PL, limitée à une distance inférieure à la valeur prescrite DMAX de distance.

La plage angulaire prescrite PL peut correspondre par exemple à un secteur angulaire de vision de l'écran 301 d'affichage, et peut être par exemple de 2π stéradian en angle solide ou être de 180 degrés dans un plan horizontal ou d'un angle inférieur à 180 degrés dans un plan horizontal. Ainsi, la machine 300 n'est déverrouillée dans ce cas que lorsque la personne portant l'objet 100 se trouve réellement devant l'écran 301 d'affichage.

Suivant un mode de réalisation, l'action de verrouillage peut n'être levée que par entrée d'un code prescrit sur une interface de la machine ou peut n'être levée que par l'action de déverrouillage.

Dans un mode de réalisation représenté à la figure 1, c'est le dispositif 200 de verrouillage et de déverrouillage de la machine 300 qui comporte le sixième moyen 6 de calcul de la distance D entre l'objet portatif 100 et le dispositif 200 de verrouillage et de déverrouillage de la machine 300 à partir du deuxième signal S2 et du troisième signal S3, et qui comporte également le septième moyen 7 de comparaison de la distance D ayant été calculée à la valeur prescrite de distance DMAX. Par exemple, dans ce cas, le sixième moyen 6 de calcul de la distance D entre l'objet portatif 100 et le dispositif 200 de verrouillage et de déverrouillage de la machine 300 calcule cette distance D à partir du deuxième instant d'émission auquel est émis le deuxième signal S2 par le deuxième émetteur-récepteur 2 et à partir du troisième instant de réception auquel est reçu le troisième signal S3 par le deuxième émetteur-récepteur 2.

Dans un autre mode de réalisation représenté à la figure 1, c'est le dispositif 200 de verrouillage et de déverrouillage de la machine 300 qui comporte le sixième moyen 6 de calcul de la distance D entre l'objet portatif 100 et le dispositif 200 de verrouillage et de déverrouillage de la machine 300 à partir du premier signal S1 et du troisième signal S3, et qui comporte également le septième moyen 7 de comparaison de la distance D ayant été calculée à la valeur prescrite de distance DMAX. Par exemple, dans ce cas, le sixième moyen 6 de calcul de la distance D entre l'objet portatif 100 et le dispositif 200 de verrouillage et de déverrouillage de la machine 300 calcule cette distance D à partir du premier instant de réception auquel est reçu le premier signal S1 par le deuxième émetteur-récepteur 2 et à partir du troisième instant de réception auquel est reçu le troisième signal S3 par le deuxième émetteur-récepteur 2.

Dans un autre mode de réalisation non représenté, c'est l'objet portatif 100 qui comporte le sixième 6 de calcul de la distance D entre l'objet portatif 100 et le dispositif 200 de verrouillage et de déverrouillage de la machine 300 à partir du premier signal S1 et du deuxième signal S2. Par exemple, dans ce cas, le sixième moyen 6 de calcul de la distance D entre l'objet portatif 100 et le dispositif 200 de verrouillage et de déverrouillage de la machine 300 calcule cette distance D à partir du premier instant d'émission auquel est émis le premier signal S1 par le premier organe 1 d'émission et à partir du deuxième instant de réception auquel est reçu le deuxième signal S2 par le quatrième récepteur 4. L'objet portatif 100 peut également comporter dans ce cas le septième moyen 7 de comparaison de la distance D ayant été calculée à la valeur prescrite de distance DMAX. Le septième moyen 7 de comparaison de la distance D ayant été calculée à la valeur prescrite de distance DMAX est apte à déterminer un résultat de comparaison indiquant soit que la distance D ayant été calculée est inférieure à la valeur prescrite de distance DMAX, soit que la distance D ayant été calculée est supérieure à la valeur prescrite de distance DMAX. Le septième moyen de comparaison est connecté au premier organe 1 d'émission pour que le premier organe 1 d'émission émette dans le troisième signal S3 le résultat de comparaison. Le troisième organe 3 de commande est apte à provoquer, lorsque le deuxième émetteur-récepteur 2 radio sans fil a reçu dans le troisième signal S3 le résultat de comparaison indiquant que la distance D ayant été calculée est inférieure à la valeur prescrite de distance DMAX, l'action de déverrouillage de la machine 300. Le troisième organe 3 de commande est apte à provoquer, lorsque le deuxième émetteur-récepteur 2 radio sans fil a reçu dans le troisième signal S3 le résultat de comparaison indiquant que la distance D ayant été calculée est supérieure à la valeur prescrite de distance DMAX, l'action de verrouillage de la machine 300.

Ainsi, l'accès à la machine 300 est automatiquement déverrouillé quand la personne portant l'objet portatif 100 se trouve à moins de la valeur prescrite de distance DMAX. Cette valeur prescrite de distance DMAX est par exemple préenregistrée dans une mémoire du dispositif 200 et/ou de l'objet portatif 100. Ainsi, ce déverrouillage ne nécessite pas l'intervention de la personne.

Egalement, le dispositif suivant l'invention permet de verrouiller automatiquement l'accès à la machine 300 lorsque la personne s'éloigne de plus de cette valeur prescrite de distance DMAX, et ce sans intervention de sa part.

Le premier organe 1 d'émission et/ou le deuxième émetteur-récepteur 2 et/ou le quatrième récepteur 4 sont par exemple à radio sans fil à impulsion, par exemple du type ultra-large bande (UWB).

En outre, un même objet portatif 100 peut provoquer le déverrouillage de plusieurs dispositifs 200 de verrouillage et de déverrouillage associés respectivement à plusieurs machines 300. Ce déverrouillage se fait pratiquement en même temps lorsque les machines 300 se trouvent à proximité les unes des autres et lorsque leur dispositif 200 de verrouillage et de déverrouillage associé détecte par le septième moyen 7 de comparaison que la distance D par rapport à chaque dispositif 200 est inférieure à la valeur prescrite de distance DMAX.

Dans un autre exemple, le déverrouillage des machines 300 peut être effectué successivement lorsque ces machines 300 sont disposées le long d'un trajet effectué par la personne portant l'objet 100, au fur et à mesure que cet objet 100 passe à moins de la valeur prescrite de distance DMAX par rapport à chaque dispositif 200 de verrouillage et de déverrouillage associé à chaque machine 300.

Suivant un mode de réalisation, le troisième organe 3 de commande est apte à provoquer, en réponse à l'absence de premier signal S1 et/ou de troisième signal S3 reçu(s) par le deuxième émetteur-récepteur 2 pendant un temps prescrit TVER, une action de verrouillage de la machine 300.

Dans un mode de réalisation, le premier organe 1 d'émission et le quatrième récepteur 4 font partie d'un même émetteur-récepteur 14 porté par l'objet portatif 100.

Le premier organe 1 d'émission radio sans fil comporte une ou plusieurs antennes 110 d'émission. Le récepteur 4 radio sans fil comporte une ou plusieurs antennes de réception, pouvant être par exemple formée par une ou plusieurs antennes 110 de l'organe 1 d'émission. L'émetteur-récepteur 2 comporte une ou plusieurs antennes 21 d'émission et de réception.

Suivant un mode de réalisation, le temps prescrit TVER est supérieur à chaque intervalle T de temps d'émission du premier signal S1 par le premier organe 1 d'émission et est inférieur à deux intervalles T de temps d'émission consécutifs du premier signal S1 par le premier organe 1 d'émission.

Dans un mode de réalisation, le premier organe 1 d'émission est agencé pour émettre à des intervalles T de temps identiques, c'est-à-dire périodiquement, le premier signal S1. Ce premier signal S1 est par exemple impulsionnel.

Suivant un mode de réalisation, le premier signal S1 et/ou le deuxième signal S2 et/ou le troisième signal S3 comporte(nt) une première identification ID1 identifiant l'objet portatif 100 et/ou la personne devant porter cet objet portatif 100 et/ou la machine 300 et/ou au moins un utilisateur autorisé de la machine 300.

Dans le mode de réalisation représenté à la figure 2, le premier signal S1 comporte une première identification ID1 identifiant l'objet portatif 100 et/ou la personne devant porter cet objet portatif 100, le deuxième signal S2 comporte une deuxième identification ID2 identifiant la machine 300 et le troisième signal S3 comporte la première identification ID1 et la deuxième identification ID2.

Suivant un mode de réalisation, l'objet portatif 100 comporte un onzième organe 11 de mise en marche et d'arrêt de de l'organe 1 d'émission et du récepteur 4.

Suivant un mode de réalisation, l'objet portatif 100 comporte un douzième capteur 12 de présence pour détecter la présence de la personne devant porter cet objet 100. Lorsque le capteur 12 détecte, par exemple par contact, que l'objet portatif 100 n'est pas porté par une personne, le capteur 12 génère un quatrième signal S4 d'inactivation de l'organe 1 d'émission et du récepteur 4, afin que ceux-ci n'émettent plus le premier signal S1 et le troisième signal S3 et ne reçoivent plus le deuxième signal S2. Le capteur 12 comporte par exemple un mécanisme de détection d'enlèvement, par exemple part contact. Lorsque le capteur 12 détecte la présence d'une personne portant l'objet 100, il n'émet pas le signal S4 d'inactivation ou émet un autre cinquième signal S5 activant le premier organe 1 d'émission et le récepteur 4, afin que ceux-ci émettent le premier signal S1 et le troisième signal S3 et reçoivent le deuxième signal S2. Il peut en outre être nécessaire de réactiver, par actionnement d'un organe d'activation supplémentaire, par exemple par l'entrée d'un code PIN, le premier organe 1 d'émission et le récepteur 4, afin que ceux-ci émettent le premier signal S1 et le troisième signal S3 et reçoivent le deuxième signal S2.

L'objet portatif 100 comporte un huitième organe 8 d'alimentation pour alimenter d'une manière autonome en énergie le premier organe 1 d'émission, le quatrième récepteur 4, le cinquième organe 5 de commande et, lorsqu'il est prévu, le capteur 12. Le capteur 12 permet donc d'économiser l'énergie de l'objet portatif 100.

Suivant un mode de réalisation, l'objet portatif 100 comporte un deuxième détecteur 13 de mouvement de l'objet portatif 100. Le cinquième organe 5 de commande est connecté au détecteur 13 de mouvement pour provoquer, lorsque ce détecteur 13 a détecté un mouvement de l'objet portatif 100, l'émission du premier signal S1 par le premier organe 1 d'émission. Ainsi, le premier signal S1 est émis sur détection de mouvement.

## Revendications

1. Dispositif de contrôle d'accès à au moins une machine (300), le dispositif comportant :
- un objet portatif (100), qui est distinct de la machine (300), qui est destiné à être porté par une personne et qui comporte au moins un premier organe (1) d'émission apte à émettre par une liaison radio sans fil un premier signal (S1),
- un dispositif (200) de verrouillage et de déverrouillage de la machine (300), comportant :
• un deuxième émetteur-récepteur (2) radio sans fil, apte à recevoir le premier signal (S1), et
• un troisième organe (3) de commande, qui est connecté au deuxième émetteur-récepteur (2) radio sans fil et qui est apte à provoquer une action de déverrouillage de la machine (300),
- le dispositif de contrôle d'accès comportant un sixième moyen (6) de calcul d'une distance (D) entre l'objet portatif (100) et le dispositif (200) de verrouillage de la machine (300), connecté à un septième moyen (7) de comparaison de la distance (D) ayant été calculée à une valeur prescrite de distance (DMAX),
**caractérisé en ce que** le troisième organe (3) de commande est apte à provoquer, lorsque le deuxième émetteur-récepteur (2) a reçu le premier signal (S1), l'émission d'un deuxième signal (S2) par le deuxième émetteur-récepteur (2) radio sans fil à destination d'un quatrième récepteur (4) radio sans fil porté par l'objet portatif (100), apte à recevoir le deuxième signal (S2),
l'objet portatif (100) comporte un cinquième organe (5) de commande, qui est connecté au premier organe (1) d'émission et au quatrième récepteur (4) radio sans fil pour provoquer, lorsque le quatrième récepteur (4) radio sans fil a reçu le deuxième signal (S2), l'émission d'un troisième signal (S3) par le premier organe (1) d'émission à destination du deuxième émetteur-récepteur (2) radio sans fil, apte à recevoir le troisième signal (S3),
le troisième organe (3) de commande et/ou cinquième organe (5) de commande étant connecté au sixième moyen (6) de calcul de la distance (D) entre l'objet portatif (100) et le dispositif (200) de verrouillage et de déverrouillage de la machine (300) à partir des deuxième et troisième signaux (S2, S3) et/ou à partir des premier et deuxième signaux (S1, S2) et/ou à partir des premier et troisième signaux (S1, S3),
l'objet portatif (100) comportant un huitième organe (8) pour alimenter d'une manière autonome en énergie le premier organe (1) d'émission, le quatrième récepteur (4) et le cinquième organe (5) de commande,
le dispositif (200) de verrouillage et de déverrouillage de la machine (300) comportant un neuvième moyen (9) de calcul d'un angle (ANG1, ANG3) d'arrivée du premier signal (S1) et/ou du troisième signal (S3) et un dixième moyen (10) de comparaison de l'angle d'arrivée (ANG1, ANG3) ayant été calculé à au moins une plage angulaire prescrite (PL),
le septième moyen (7) de comparaison et le dixième moyen (10) de comparaison étant connectés au troisième organe (3) de commande pour provoquer, lorsque le dixième moyen (10) de comparaison a déterminé que l'angle (ANG1, ANG3) d'arrivée ayant été calculé se trouve dans la plage angulaire prescrite (PL) et lorsque le septième moyen (7) de comparaison a déterminé que la distance (D) ayant été calculée est inférieure à la valeur prescrite de distance (DMAX), l'action de déverrouillage de la machine (300), et pour provoquer, lorsque le dixième moyen (10) de comparaison a déterminé que l'angle (ANG1, ANG3) d'arrivée ayant été calculé ne se trouve pas dans la plage angulaire prescrite (PL) et/ou lorsque le septième moyen (7) de comparaison a déterminé que la distance (D) ayant été calculée est supérieure à la valeur prescrite de distance (DMAX), une action de verrouillage de la machine (300).

2. Dispositif suivant la revendication 1, **caractérisé en ce que** la machine (300) comporte au moins un écran (301) d'affichage, la plage angulaire prescrite (PL) est comprise dans une zone située devant l'écran (301) d'affichage.

3. Dispositif suivant la revendication 2, **caractérisé en ce que** la plage angulaire prescrite (PL) correspond à un secteur angulaire de vision de l'écran (301) d'affichage.

4. Dispositif suivant l'une quelconque des revendications 1 à 3, **caractérisé en ce que** le dispositif (200) de verrouillage et de déverrouillage de la machine (300) comporte le sixième moyen (6) de calcul de la distance (D) entre l'objet portatif (100) et le dispositif (200) de verrouillage et de déverrouillage de la machine (300) à partir des deuxième et troisième signaux (S2, S3), ainsi que le septième moyen (7) de comparaison de la distance (D) ayant été calculée à la valeur prescrite de distance (DMAX).

5. Dispositif suivant l'une quelconque des revendications 1 à 3, **caractérisé en ce que** l'objet portatif (100) comporte le sixième moyen (6) de calcul de la distance (D) entre l'objet portatif (100) et le dispositif (200) de verrouillage et de déverrouillage de la machine (300) à partir des premier et deuxième signaux (S1, S2).

6. Dispositif suivant la revendication 5, **caractérisé en ce que** l'objet portatif (100) comporte également le septième moyen (7) de comparaison de la distance (D) ayant été calculée à la valeur prescrite de distance (DMAX), apte à déterminer un résultat de comparaison indiquant soit que la distance (D) ayant été calculée est inférieure à la valeur prescrite de distance (DMAX), soit que la distance (D) ayant été calculée est supérieure à la valeur prescrite de distance (DMAX),
le septième moyen (7) de comparaison étant connecté au premier organe (1) d'émission pour que le premier organe (1) d'émission émette dans le troisième signal (S3) le résultat de comparaison,
le troisième organe (3) de commande étant apte à provoquer, lorsque le deuxième émetteur-récepteur (2) radio sans fil a reçu dans le troisième signal (S3) le résultat de comparaison indiquant que la distance (D) ayant été calculée est inférieure à la valeur prescrite de distance (DMAX), l'action de déverrouillage de la machine (300).

7. Dispositif suivant l'une quelconque des revendications 1 à 3, **caractérisé en ce que** le dispositif (200) de verrouillage et de déverrouillage de la machine (300) comporte le sixième moyen (6) de calcul de la distance (D) entre l'objet portatif (100) et le dispositif (200) de verrouillage et de déverrouillage de la machine (300) à partir des premier et troisième signaux (S1, S3), ainsi que le septième moyen (7) de comparaison de la distance (D) ayant été calculée à la valeur prescrite de distance (DMAX).

8. Dispositif suivant l'une quelconque des revendications précédentes, **caractérisé en ce que** le troisième organe (3) de commande est apte à provoquer, en réponse à l'absence de premier signal (S1) et/ou de troisième signal (S3) reçu par le deuxième émetteur-récepteur (2) pendant un temps prescrit (TVER), une action de verrouillage de la machine (300).

9. Dispositif suivant l'une quelconque des revendications précédentes, **caractérisé en ce que** le premier organe (1) d'émission est agencé pour émettre en permanence selon des intervalles (T) de temps le premier signal (S1).

10. Dispositif suivant les revendications 7 et 8 prises ensemble, **caractérisé en ce que** le temps prescrit (TVER) est supérieur à chaque intervalle (T) de temps d'émission du premier signal (S1) par le premier organe (1) d'émission et inférieur à deux intervalles de temps d'émission consécutifs du premier signal (S1) par le premier organe (1) d'émission.

11. Dispositif suivant l'une quelconque des revendications précédentes, **caractérisé en ce que** le premier signal (S1) et/ou le deuxième signal (S2) et/ou le troisième signal (S3) comporte une première identification (ID1) identifiant l'objet portatif (100) et/ou la personne devant porter cet objet portatif (100) et/ou la machine (300) et/ou au moins un utilisateur autorisé de la machine (300).

12. Dispositif suivant l'une quelconque des revendications précédentes, **caractérisé en ce que**
le premier signal (S1) comporte une première identification (ID1) identifiant l'objet portatif (100) et/ou la personne devant porter cet objet portatif (100),
le deuxième signal (S2) comporte une deuxième identification (ID2) identifiant la machine (300), et
le troisième signal (S3) comporte la première identification (ID1) et la deuxième identification (ID2).

13. Dispositif suivant l'une quelconque des revendications précédentes, **caractérisé en ce que** le premier organe (1) d'émission est agencé pour émettre le premier signal (S1) de manière omnidirectionnelle.

14. Dispositif suivant l'une quelconque des revendications précédentes, **caractérisé en ce que** l'objet portatif (100) comporte un premier capteur (12) de détection de présence d'une personne portant l'objet portatif (100), le cinquième organe (5) de commande et/ou le premier organe (1) d'émission étant relié au premier capteur (12) pour lui envoyer, lorsque le premier capteur (12) a détecté que l'objet portatif (100) n'est pas porté par une personne, un signal (S4) d'inactivation du premier organe (1) d'émission afin que celui-ci n'émette plus le premier signal (S1).

15. Dispositif suivant l'une quelconque des revendications précédentes, **caractérisé en ce que** l'objet portatif (100) comporte un deuxième détecteur (13) de mouvement de l'objet portatif (100), le cinquième organe (5) de commande étant connecté au deuxième détecteur (13) de mouvement de l'objet portatif (100) pour provoquer, lorsque le deuxième détecteur (13) de mouvement de l'objet portatif (100) a détecté un mouvement de l'objet portatif (100), l'émission du premier signal (S1).

16. Dispositif suivant l'une quelconque des revendications précédentes, **caractérisé en ce que** l'action de verrouillage comporte une action d'effacement de données.

17. Procédé de contrôle d'accès à au moins une machine (300), dans lequel :
- un objet portatif (100), qui est distinct de la machine (300), qui est destiné à être porté par une personne, émet par au moins un premier organe (1) d'émission par une liaison radio sans fil un premier signal (S1),
- un deuxième émetteur-récepteur (2) radio sans fil d'un dispositif (200) de verrouillage et de déverrouillage de la machine (300) reçoit le premier signal (S1),
le procédé utilisant un sixième moyen (6) de calcul d'une distance (D) entre l'objet portatif (100) et le dispositif (200) de verrouillage de la machine (300), connecté à un septième moyen (7) de comparaison de la distance (D) ayant été calculée à une valeur prescrite de distance (DMAX),
**caractérisé en ce que** un troisième organe (3) de commande, qui est connecté au deuxième émetteur-récepteur (2) radio sans fil provoque, lorsque le deuxième émetteur-récepteur (2) a reçu le premier signal (S1), l'émission d'un deuxième signal (S2) par le deuxième émetteur-récepteur (2) radio sans fil à destination d'un quatrième récepteur (4) radio sans fil porté par l'objet portatif (100), apte à recevoir le deuxième signal (S2),
un cinquième organe (5) de commande de l'objet portatif (100), qui est connecté au premier organe (1) d'émission et au quatrième récepteur (4) radio sans fil, provoque, lorsque le quatrième récepteur (4) radio sans fil a reçu le deuxième signal (S2), l'émission d'un troisième signal (S3) par le premier organe (1) d'émission à destination du deuxième émetteur-récepteur (2) radio sans fil,
le deuxième émetteur-récepteur (2) radio sans fil, reçoit le troisième signal (S3),
le troisième organe (3) de commande et/ou cinquième organe (5) de commande étant connecté au sixième moyen (6) de calcul qui calcule la distance (D) entre l'objet portatif (100) et le dispositif (200) de verrouillage et de déverrouillage de la machine (300) à partir des deuxième et troisième signaux (S2, S3) et/ou à partir des premier et deuxième signaux (S1, S2),
un huitième organe (8) d'alimentation de l'objet portatif (100) alimentant d'une manière autonome en énergie le premier organe (1) d'émission, le quatrième récepteur (4) et le cinquième organe (5) de commande,
le dispositif (200) de verrouillage et de déverrouillage de la machine (300) comportant un neuvième moyen (9) de calcul d'un angle (ANG1, ANG3) d'arrivée du premier signal (S1) et/ou du troisième signal (S3) et un dixième moyen (10) de comparaison de l'angle d'arrivée (ANG1, ANG3) ayant été calculé à au moins une plage angulaire prescrite (PL),
le septième moyen (7) de comparaison et le dixième moyen (10) de comparaison étant connectés au troisième organe (3) de commande,
le septième moyen (7) de comparaison et le dixième moyen (10) de comparaison provoquent, lorsque le dixième moyen (10) de comparaison a déterminé que l'angle (ANG1, ANG3) d'arrivée ayant été calculé se trouve dans la plage angulaire prescrite (PL) et lorsque le septième moyen (7) de comparaison a déterminé que la distance (D) ayant été calculée est inférieure à la valeur prescrite de distance (DMAX), l'action de déverrouillage de la machine (300), et provoquent, lorsque le dixième moyen (10) de comparaison a déterminé que l'angle (ANG1, ANG3) d'arrivée ayant été calculé ne se trouve pas dans la plage angulaire prescrite (PL) et/ou lorsque le septième moyen (7) de comparaison a déterminé que la distance (D) ayant été calculée est supérieure à la valeur prescrite de distance (DMAX), une action de verrouillage de la machine (300).

## Patentansprüche

1. Vorrichtung zur Steuerung des Zugriffs auf mindestens eine Maschine (300), wobei die Vorrichtung aufweist:
- ein tragbares Objekt (100), das sich von der Maschine (300) unterscheidet, das dazu bestimmt ist, von einer Person getragen zu werden und das mindestens ein erstes Sendeorgan (1) aufweist, das imstande ist, über eine drahtlose Funkverbindung ein erstes Signal (S1) zu senden,
- eine Vorrichtung (200) zur Verriegelung und Entriegelung) der Maschine (300), aufweisend:
• einen zweiten drahtlosen Funksender-Empfänger (2), der imstande ist, das erste Signal (S1) zu empfangen, und
• ein drittes Steuerorgan (3), das mit dem zweiten drahtlosen Funksender-Empfänger (2) verbunden ist und das imstande ist, eine Entriegelungsaktion der Maschine (300) auszulösen,
- wobei die Vorrichtung zur Steuerung des Zugriffs ein sechstes Mittel (6) zur Berechnung eines Abstands (D) zwischen dem tragbaren Objekt (100) und der Vorrichtung (200) zur Verriegelung der Maschine (300), verbunden mit einem siebenten Vergleichsmittel (7) zum Vergleich des berechneten Abstands (D) mit einem vorgeschriebenen Abstandswert (DMAX), aufweist,
**dadurch gekennzeichnet, dass** das dritte Steuerorgan (3) imstande ist, wenn der zweite Sender-Empfänger (2) das erste Signal (S1) empfangen hat, die Sendung eines zweiten Signals (S2) durch den zweiten drahtlosen Funksender-Empfänger (2) in Richtung eines vierten drahtlosen Funkempfängers (4) auszulösen, der von dem tragbaren Objekt (100) getragen wird und der imstande ist, das zweite Signal (S2) zu empfangen,
wobei das tragbare Objekt (100) ein fünftes Steuerorgan (5) aufweist, das mit dem ersten Sendeorgan (1) und mit dem vierten drahtlosen Funkempfänger (4) verbunden ist, um, wenn der vierte drahtlose Funkempfängers (4) das zweite Signal (S2) empfangen hat, die Sendung eines dritten Signals (S3) durch das erste Sendeorgan (1) in Richtung des zweiten drahtlosen Funksender-Empfängers (2) auszulösen, der imstande ist, das dritte Signal (S3) zu empfangen,
wobei das dritte Steuerorgan (3) und/oder fünfte Steuerorgan (5) mit dem sechsten Mittel (6) zur Berechnung des Abstands (D) zwischen dem tragbaren Objekt (100) und der Vorrichtung (200) zur Verriegelung und Entriegelung der Maschine (300) ausgehend von dem zweiten und dritten Signal (S2, S3) und/oder ausgehend von dem ersten und zweiten Signal (S1, S2) und/oder ausgehend von dem ersten und dritten Signal (S1, S3) verbunden sind,
wobei das tragbare Objekt (100) ein achtes Organ (8) aufweist, um das erste Sendeorgan (1), den vierten Empfänger (4) und das fünfte Steuerorgan (5) autonom mit Energie zu versorgen,
wobei die Vorrichtung (200) zur Verriegelung und Entriegelung der Maschine (300) ein neuntes Mittel (9) zur Berechnung eines Ankunftswinkels (ANG1, ANG3) des ersten Signals (S1) und/oder des dritten Signals (S3) und ein zehntes Vergleichsmittel (10) zum Vergleich des berechneten Ankunftswinkels (ANG1, ANG3) mit mindestens einem vorgeschriebenen Winkelbereich (PL) aufweist,
wobei das siebente Vergleichsmittel (7) und das zehnte Vergleichsmittel (10) mit dem dritten Steuerorgan (3) verbunden sind, um, wenn das zehnte Vergleichsmittel (10) ermittelt hat, dass sich der berechnete Ankunftswinkel (ANG1, ANG3) in dem vorgeschriebenen Winkelbereich (PL) befindet, und wenn das siebente Vergleichsmittel (7) ermittelt hat, dass der berechnete Abstand (D) kleiner als der vorgeschriebene Abstandswert (DMAX) ist, die Entriegelungsaktion der Maschine (300) auszulösen, und um, wenn das zehnte Vergleichsmittel (10) ermittelt hat, dass sich der berechnete Ankunftswinkel (ANG1, ANG3) nicht in dem vorgeschriebenen Winkelbereich (PL) befindet und/oder wenn das siebente Vergleichsmittel (7) ermittelt hat, dass der berechnete Abstand (D) größer als der vorgeschriebene Abstandswert (DMAX) ist, eine Verriegelungsaktion der Maschine (300) auszulösen.

2. Vorrichtung nach Anspruch 1, **dadurch gekennzeichnet, dass** die Maschine (300) mindestens einen Anzeigebildschirm (301) aufweist, wobei sich der vorgeschriebene Winkelbereich (PL) in einer Zone liegt, die sich vor dem Anzeigebildschirm (301) befindet.

3. Vorrichtung nach Anspruch 2, **dadurch gekennzeichnet, dass** der vorgeschriebene Winkelbereich (PL) einem Sichtwinkelsektor des Anzeigebildschirms (301) entspricht.

4. Vorrichtung nach einem der Ansprüche 1 bis 3, **dadurch gekennzeichnet, dass** die Vorrichtung (200) zur Verriegelung und Entriegelung der Maschine (300) das sechste Mittel (6) zur Berechnung des Abstands (D) zwischen dem tragbaren Objekt (100) und der Vorrichtung (200) zur Verriegelung und Entriegelung der Maschine (300) ausgehend von dem zweiten und dritten Signal (S2, S3) sowie das siebente Vergleichsmittel (7) zum Vergleich des berechneten Abstands (D) mit dem vorgeschriebenen Abstandswert (DMAX) aufweist.

5. Vorrichtung nach einem der Ansprüche 1 bis 3, **dadurch gekennzeichnet, dass** das tragbare Objekt (100) das sechste Mittel (6) zur Berechnung des Abstands (D) zwischen dem tragbaren Objekt (100) und der Vorrichtung (200) zur Verriegelung und Entriegelung der Maschine (300) ausgehend von dem erstes und zweiten Signal (S1, S2) aufweist.

6. Vorrichtung nach Anspruch 5, **dadurch gekennzeichnet, dass** das tragbare Objekt (100) ebenfalls das siebente Vergleichsmittel (7) zum Vergleich des berechneten Abstands (D) mit dem vorgeschriebenen Abstandswert (DMAX) aufweist, das imstande ist, ein Vergleichsergebnis zu ermitteln, das entweder angibt, dass der berechnete Abstand (D) kleiner als der vorgeschriebene Abstandswert (DMAX) ist oder dass der berechnete Abstand (D) größer als der vorgeschriebene Abstandswert (DMAX) ist,
wobei das siebente Vergleichsmittel (7) mit dem ersten Sendeorgan (1) verbunden ist, damit das erste Sendeorgan (1) im dritten Signal (S3) das Vergleichsergebnis sendet,
wobei das dritte Steuerorgan (3) imstande ist, wenn der zweite drahtlose Funksender-Empfänger (2) im dritten Signal (S3) das Vergleichsergebnis empfangen hat, das angibt, dass der berechnete Abstand (D) kleiner als der vorgeschriebene Abstandswert (DMAX) ist, die Entriegelungsaktion der Maschine (300) auszulösen.

7. Vorrichtung nach einem der Ansprüche 1 bis 3, **dadurch gekennzeichnet, dass** die Vorrichtung (200) zur Verriegelung und Entriegelung der Maschine (300) das sechste Mittel (6) zur Berechnung des Abstands (D) zwischen dem tragbaren Objekt (100) und der Vorrichtung (200) zur Verriegelung und Entriegelung der Maschine (300) ausgehend von dem ersten und dritten Signal (S1, S3) sowie das siebente Vergleichsmittel (7) zum Vergleich des berechneten Abstands (D) mit dem vorgeschriebenen Abstandswert (DMAX) aufweist.

8. Vorrichtung nach einem der vorangehenden Ansprüche, **dadurch gekennzeichnet, dass** das dritte Steuerorgan (3) imstande ist, als Antwort auf die Abwesenheit des Empfangs des ersten Signals (S1) und/oder des dritten Signals (S3) durch den zweiten Sender-Empfänger (2) während einer vorgeschriebenen Zeit (TVER) eine Verriegelungsaktion der Maschine (300) auszulösen.

9. Vorrichtung nach einem der vorangehenden Ansprüche, **dadurch gekennzeichnet, dass** das erste Sendeorgan (1) ausgebildet ist, um das erste Signal (S1) ständig in Zeitintervallen (T) zu senden.

10. Vorrichtung nach den gemeinsam herangezogenen Ansprüchen 7 und 8, **dadurch gekennzeichnet, dass** die vorgeschriebene Zeit (TVER) größer als jedes Sendezeitintervall (T) des ersten Signals (S1) durch das erste Sendeorgan (1) und kleiner als zwei aufeinanderfolgende Sendezeitintervalle des ersten Signals (S1) durch das erste Sendeorgan (1) ist.

11. Vorrichtung nach einem der vorangehenden Ansprüche, **dadurch gekennzeichnet, dass** das erste Signal (S1) und/oder das zweite Signal (S2) und/oder das dritte Signal (S3) eine erste Identifikation (ID1) aufweist, die das tragbare Objekt (100) und/oder die Person, die dieses tragbare Objekt (100) tragen muss, und/oder die Maschine (300) und/oder mindestens einen zugelassenen Benutzer der Maschine (300) identifiziert.

12. Vorrichtung nach einem der vorangehenden Ansprüche, **dadurch gekennzeichnet, dass**
das erste Signal (S1) eine erste Identifikation (ID1) aufweist, die das tragbare Objekt (100) und/oder die Person, die dieses tragbare Objekt (100) tragen muss, identifiziert,
das zweite Signal (S2) eine zweite Identifikation (ID2) aufweist, die die Maschine (300) identifiziert, und
das dritte Signal (S3) die erste Identifikation (ID1) und die zweite Identifikation (ID2) aufweist.

13. Vorrichtung nach einem der vorangehenden Ansprüche, **dadurch gekennzeichnet, dass** das erste Sendeorgan (1) ausgebildet ist, um das erste Signal (S1) ungerichtet zu senden.

14. Vorrichtung nach einem der vorangehenden Ansprüche, **dadurch gekennzeichnet, dass** das tragbare Objekt (100) einen ersten Sensor (12) zur Anwesenheitsdetektion einer Person aufweist, die das tragbare Objekt (100) trägt, wobei das fünfte Steuerorgan (5) und/oder das erste Sendeorgan (1) mit dem ersten Sensor (12) verbunden sind, um ihm, wenn der erste Sensor (12) ermittelt hat, dass das tragbare Objekt (100) nicht von einer Person getragen wird, ein Signal (S4) zur Inaktivierung des ersten Sendeorgans (1) zu schicken, damit dieses das erste Signal (S1) nicht mehr sendet.

15. Vorrichtung nach einem der vorangehenden Ansprüche, **dadurch gekennzeichnet, dass** das tragbare Objekt (100) einen zweiten Bewegungsdetektor (13) zur Bewegungsdetektion des tragbaren Objekts (100) aufweist, wobei das fünfte Steuerorgan (5) mit dem zweiten Bewegungsdetektor (13) zur Bewegungsdetektion des tragbaren Objekts (100) verbunden ist, um, wenn der zweite Bewegungsdetektor (13) zur Bewegungsdetektion des tragbaren Objekts (100) eine Bewegung des tragbaren Objekts (100) ermittelt hat, die Sendung des ersten Signals (S1) auszulösen.

16. Vorrichtung nach einem der vorangehenden Ansprüche, **dadurch gekennzeichnet, dass** die Verriegelungsaktion eine Datenlöschaktion aufweist.

17. Verfahren zur Steuerung des Zugriffs auf mindestens eine Maschine (300), wobei:
- ein tragbares Objekt (100), das sich von der Maschine (300) unterscheidet und das dazu bestimmt ist, von einer Person getragen zu werden, durch mindestens ein erstes Sendeorgan (1) über eine drahtlose Funkverbindung ein erstes Signal (S1) sendet,
- ein zweiter drahtloser Funksender-Empfänger (2) einer Vorrichtung (200) zur Verriegelung und Entriegelung der Maschine (300) das erste Signal (S1) empfängt,
wobei das Verfahren ein sechstes Mittel (6) zur Berechnung eines Abstands (D) zwischen dem tragbaren Objekt (100) und der Vorrichtung (200) zur Verriegelung der Maschine (300), verbunden mit einem siebenten Vergleichsmittel (7) zum Vergleich des berechneten Abstands (D) mit einem vorgeschriebenen Abstandswert (DMAX), verwendet,
**dadurch gekennzeichnet, dass** ein drittes Steuerorgan (3), das mit dem zweiten drahtlosen Funksender-Empfänger (2) verbunden ist, wenn der zweite Sender-Empfänger (2) das erste Signal (S1) erhalten hat, die Sendung eines zweiten Signals (S2) durch den zweiten drahtlosen Funksender-Empfänger (2) in Richtung eines vierten drahtlosen Funkempfängers (4), der von dem tragbaren Objekt (100) getragen wird, der imstande ist, das zweite Signal (S2) zu empfangen, auslöst,
ein fünftes Steuerorgan (5) des tragbaren Objekts (100), das mit dem ersten Sendeorgan (1) und mit dem vierten drahtlosen Funkempfänger (4) verbunden ist, wenn der vierte drahtlose Funkempfänger (4) das zweite Signal (S2) erhalten hat, die Sendung eines dritten Signals (S3) durch das erste Sendeorgan (1) in Richtung des zweiten drahtlosen Funksender-Empfängers (2) auslöst,
der zweite drahtlose Funksender-Empfänger (2) das dritte Signal (S3) empfängt,
wobei das dritte Steuerorgan (3) und/oder fünfte Steuerorgan (5) mit dem sechsten Mittel (6) zur Berechnung verbunden ist, das den Abstand (D) zwischen dem tragbaren Objekt (100) und der Vorrichtung (200) zur Verriegelung und Entriegelung der Maschine (300) ausgehend von dem zweiten und dritten Signal (S2, S3) und/oder ausgehend von dem ersten und zweiten Signal (S1, S2) berechnet,
wobei ein achtes Versorgungsorgan (8) des tragbaren Objekts (100) das erste Sendeorgan (1), den vierten Empfänger (4) und das fünfte Steuerorgan (5) autonom mit Energie versorgt,
wobei die Vorrichtung (200) zur Verriegelung und Entriegelung der Maschine (300) ein neuntes Mittel (9) zur Berechnung eines Ankunftswinkels (ANG1, ANG3) des ersten Signals (S1) und/oder des dritten Signals (S3) und ein zehntes Vergleichsmittel (10) zum Vergleich des berechneten Ankunftswinkels (ANG1, ANG3) mit mindestens einem vorgeschriebenen Winkelbereich (PL) aufweist,
wobei das siebente Vergleichsmittel (7) und das zehnte Vergleichsmittel (10) mit dem dritten Steuerorgan (3) verbunden sind,
wobei das siebente Vergleichsmittel (7) und das zehnte Vergleichsmittel (10), wenn das zehnte Vergleichsmittel (10) ermittelt hat, dass sich der berechnet Ankunftswinkel (ANG1, ANG3) im vorgeschriebenen Winkelbereich (PL) befindet, und wenn das siebente Vergleichsmittel (7) ermittelt hat, dass der berechnete Abstand (D) kleiner als der vorgeschriebene Abstandswert (DMAX) ist, die Entriegelungsaktion der Maschine (300) auslösen, und wenn das zehnte Vergleichsmittel (10) ermittelt hat, dass sich der berechnete Ankunftswinkel (ANG1, ANG3) nicht im vorgeschriebenen Winkelbereich (PL) befindet und/oder wenn das siebente Vergleichsmittel (7) ermittelt hat, dass der berechnete Abstand (D) größer als der vorgeschriebene Abstandswert (DMAX) ist, eine Verriegelungsaktion der Maschine (300) auslösen.

## Claims

1. A device for controlling access to at least one machine (300), the device comprising:
- a portable object (100), which is separate from the machine (300), which is intended to be borne by a person and which comprises at least one first transmission member (1) capable of transmitting via a wireless radio link a first signal (S1),
- a device (200) for locking and unlocking of the machine (300), comprising:
• a second wireless radio transceiver (2), capable of receiving the first signal (S1), and
• a third control member (3), which is connected to the second wireless radio transceiver (2) and which is capable of causing an action of unlocking of the machine (300),
- wherein the device for controlling access comprises a sixth means (6) for calculation of a distance (D) between the portable object (100) and the device (200) for locking and unlocking of the machine (300), connected to a seventh comparison means (7) for comparison of the distance (D) having been calculated to a prescribed value of distance (DMAX),
**characterized in that** the third control member (3) is capable of causing, when the second wireless radio transceiver (2) has received the first signal (S1), the transmission of a second signal (S2) by the second wireless radio transceiver (2) to a fourth wireless radio receiver (4) borne by the portable object (100), capable of receiving the second signal (S2),
the portable object (100) comprises a fifth control member (5), which is connected to the first transmission member (1) and to the fourth wireless radio receiver (4) to cause, when the fourth wireless radio receiver (4) has received the second signal (S2), transmission of a third signal (S3) by the first transmission member (1) to the second wireless radio transceiver (2), capable of receiving the third signal (S3),
the third control member (3) and/or fifth control member (5) being connected to the sixth means (6) for calculation of a distance (D) between the portable object (100) and the device (200) for locking and unlocking of the machine (300) from the second and third signals (S2, S3) and/or from the first and second signals (S1, S2) and/or from the first and third signals (S1, S3),
the portable object (100) comprising an eighth member (8) for autonomously supplying the first transmission member (1), the fourth wireless radio receiver (4) and the fifth control member (5) with power,
the device (200) for locking and unlocking of the machine (300) comprising a ninth means (9) for calculation of an angle of arrival (ANG1, ANG3) of the first signal (S1) and/or of the third signal (S3) and a tenth comparison means (10) for comparison of the angle of arrival (ANG1, ANG3) having been calculated to at least one prescribed angular range (PL),
the seventh comparison means (7) and the tenth comparison means (10) being connected to the third control member (3) to cause, when the tenth comparison means (10) has determined that the angle of arrival (ANG1, ANG3) having been calculated is in the prescribed angular range (PL) and when the seventh comparison means (7) has determined that the distance (D) having been calculated is less than the prescribed value of distance (DMAX), the action of unlocking of the machine (300), and to cause, when the tenth comparison means (10) has determined that the angle of arrival (ANG1, ANG3) having been calculated is not in the prescribed angular range (PL) and/or when the seventh comparison means (7) has determined that the distance (D) having been calculated is greater than the prescribed value of distance (DMAX), an action of locking of the machine (300).

2. The device according to claim 1, **characterized in that** the machine (300) comprises at least one display screen (301), the prescribed angular range (PL) is comprised in an area located in front of the display screen (301).

3. The device according to claim 2, **characterized in that** the prescribed angular range (PL) corresponds to an angular sector of vision of the display screen (301).

4. The device according to any one of claims 1 to 3, **characterized in that** the device (200) for locking and unlocking of the machine (300) comprises the sixth means (6) for calculation of the distance (D) between the portable object (100) and the device (200) for locking and unlocking of the machine (300) from the second and third signals (S2, S3), and the seventh comparison means (7) for comparison of the distance (D) having been calculated to the prescribed value of distance (DMAX).

5. The device according to any one of claims 1 to 3, **characterized in that** the portable object (100) comprises the sixth means (6) for calculation of the distance (D) between the portable object (100) and the device (200) for locking and unlocking of the machine (300) from the first and second signals (S1, S2).

6. The device according to claim 5, **characterized in that** the portable object (100) also comprises the seventh comparison means (7) for comparison of the distance (D) having been calculated to the prescribed value of distance (DMAX), capable of determining a comparison result indicating either that the distance (D) having been calculated is less than the prescribed value of distance (DMAX), or that the distance (D) having been calculated is greater than the prescribed value of distance (DMAX),
the seventh comparison means (7) being connected to the first transmission member (1) so that the first transmission member (1) transmits in the third signal (S3) the comparison result,
the third control member (3) being capable of causing, when the second wireless radio transceiver (2) has received in the third signal (S3) the comparison result indicating that the distance (D) having been calculated is less than the prescribed value of distance (DMAX), the action of unlocking of the machine (300).

7. The device according to any one of claims 1 to 3, **characterized in that** the locking and unlocking device (200) of the machine (300) comprises the sixth means (6) for calculation of the distance (D) between the portable object (100) and the device (200) for locking and unlocking of the machine (300) from the first and third signals (S1, S3), and the seventh comparison means (7) for comparison of the distance (D) having been calculated to the prescribed value of distance (DMAX).

8. The device according to any one of the preceding claims, **characterized in that** the third control member (3) is capable of causing, in response to the absence of first signal (S1) and/or third signal (S3) received by the second wireless radio transceiver (2) during a prescribed time (TVER), an action of locking of the machine (300).

9. The device according to any one of the preceding claims, **characterized in that** the first transmission member (1) is arranged to transmit the first signal (S1) permanently according to time intervals (T).

10. The device according to claims 7 and 8 taken jointly, **characterized in that** the prescribed time (TVER) is greater than each transmission time interval (T) of the first signal (S1) by the first transmission member (1) and fewer than two consecutive transmission time intervals of the first signal (S1) by the first transmission member (1).

11. The device according to any one of the preceding claims, **characterized in that** the first signal (S1) and/or the second signal (S2) and/or the third signal (S3) comprises a first identification (ID1) identifying the portable object (100) and/or the person having to carry the portable object (100) and/or the machine (300) and/or at least one authorized user of the machine (300).

12. The device according to any one of the preceding claims, **characterized in that**
the first signal (S1) comprises a first identification (ID1) identifying the portable object (100) and/or the person having to carry the portable object (100),
the second signal (S2) comprises a second identification (ID2) identifying the machine (300), and
the third signal (S3) comprises the first identification (ID1) and the second identification (ID2).

13. The device according to any one of the preceding claims, **characterized in that** the first transmission member (1) is arranged to transmit the first signal (S1) omnidirectionally.

14. The device according to any one of the preceding claims, **characterized in that** the portable object (100) comprises a first sensor (12) for detection of the presence of a person carrying the portable object (100), the fifth control member (5) and/or the first transmission member (1) being connected to the first sensor (12) to send to it, when the first sensor (12) has detected that the portable object (100) is not borne by a person, a signal (S4) for inactivation of the first transmission member (1) so that the latter no longer transmits the first signal (S1).

15. The device according to any one of the preceding claims, **characterized in that** the portable object (100) comprises a second detector (13) of movement of the portable object (100), the fifth control member (5) being connected to the second detector (13) of movement of the portable object (100) to cause, when the second detector (13) of movement of the portable object (100) has detected movement of the portable object (100), the transmission of the first signal (S1).

16. The device according to any one of the preceding claims, **characterized in that** the action of locking comprises a data erasing action.

17. A method for controlling access to at least one machine (300), wherein:
- a portable object (100), which is separate from the machine (300) and which is intended to be borne by a person, transmits via at least one first transmission member (1) via a wireless radio link a first signal (S1),
- a second wireless radio transceiver (2) of a device (200) for locking and unlocking of the machine (300) receives the first signal (S1),
the method using a sixth means (6) for calculation of a distance (D) between the portable object (100) and the device (200) for locking and unlocking of the machine (300), connected to a seventh comparison means (7) for comparison of the distance (D) having been calculated to a prescribed value of distance (DMAX),
**characterized in that** a third control member (3), which is connected to the second wireless radio transceiver (2) causes, when the second wireless radio transceiver (2) has received the first signal (S1), the transmission of a second signal (S2) by the second wireless radio transceiver (2) to a fourth wireless radio receiver (4) borne by the portable object (100), capable of receiving the second signal (S2),
a fifth control member (5) of the portable object (100), which is connected to the first transmission member (1) and to the fourth wireless radio receiver (4), causes, when the fourth wireless radio receiver (4) has received the second signal (S2), transmission of a third signal (S3) by the first transmission member (1) to the second wireless radio transceiver (2),
the second wireless radio transceiver (2) receives the third signal (S3),
the third control member (3) and/or fifth control member (5) being connected to the sixth means (6) for calculation, which calculates the distance (D) between the portable object (100) and the device (200) for locking and unlocking of the machine (300) from the second and third signals (S2, S3) and/or from the first and second signals (S1, S2),
an eighth supply member (8) of the portable object (100) autonomously supplying the first transmission member (1), the fourth wireless radio receiver (4) and the fifth control member (5) with power,
the device (200) for locking and unlocking of the machine (300) comprising a ninth means (9) for calculation of an angle of arrival (ANG1, ANG3) of the first signal (S1) and/or of the third signal (S3) and a tenth comparison means (10) for comparison of the angle of arrival (ANG1, ANG3) having been calculated to at least one prescribed angular range (PL),
the seventh comparison means (7) and the tenth comparison means (10) being connected to the third control member (3),
the seventh comparison means (7) and the tenth comparison means (10) cause, when the tenth comparison means (10) has determined that the angle of arrival (ANG1, ANG3) having been calculated is in the prescribed angular range (PL) and when the seventh comparison means (7) has determined that the distance (D) having been calculated is less than the prescribed value of distance (DMAX), the action of unlocking of the machine (300), and cause, when the tenth comparison means (10) has determined that the angle of arrival (ANG1, ANG3) having been calculated is not in the prescribed angular range (PL) and/or when the seventh comparison means (7) has determined that the distance (D) having been calculated is greater than the prescribed value of distance (DMAX), an action of locking of the machine (300).
